# EUROPEAN PATENT APPLICATION

(11) **EP 4 379 542 A1**
(43) Date of publication of application: **05.06.2024**
(21) Application number: 23212489.1
(22) Date of filing: 28.11.2023
(51) Int. Cl.: G06F 9/445, G06F 9/455

(54) **SYSTEMS AND METHODS FOR SOFTWARE EXECUTION ENVIRONMENT MANAGEMENT**

(30) Priority: 30.11.2022 US 202263428980 P
(71) Applicant: Palantir Technologies Inc., Denver, CO 80202 (US)
(72) Inventor: KUSHCHENKO, Oleksandr, London (GB)
(74) Representative: Derry, Paul Stefan

(57) **Abstract**

Systems and methods for managing a software execution environment are provided. For example, a method comprises: determining an execution environment state corresponding to an execution environment; providing, to a management platform, an indication of the determined execution environment state; receiving, from the management platform, a recommendation for the execution environment that is based on the execution environment state; and configuring the execution environment according to the received recommendation.

## Description

### TECHNICAL FIELD

Certain embodiments of the present disclosure are directed to systems and methods for managing a software execution environment. More particularly, some embodiments of the present disclosure provide systems and methods for monitoring the health of an execution environment and updating a configuration of the execution environment accordingly.

### BACKGROUND

An execution environment may include a number of software installations. However, each software installation may have one or more different versions and a large number of execution environments may be managed, such that existing technology is unable to manage a potentially varied and/or changing set of execution environments.

Hence it is desirable to provide improved management technologies for a given execution environment.

### SUMMARY

Certain embodiments of the present disclosure are directed to systems and methods for managing a software execution environment. More particularly, some embodiments of the present disclosure provide systems and methods for monitoring the health of an execution environment and updating a configuration of the execution environment accordingly.

In some embodiments, a method for managing an execution environment by an environment manager is provided. The method comprises: determining an execution environment state corresponding to an execution environment; providing, to a management platform, an indication of the determined execution environment state; receiving, from the management platform, a recommendation for the execution environment that is based on the execution environment state; and configuring the execution environment according to the received recommendation, wherein the method is performed using one or more processors.

In certain embodiments, a method for managing an execution environment by an execution manager entrypoint is provided. The method comprises: determining, for an execution environment while the execution environment is executing, an execution environment health; providing, to a management platform, an indication of the determined execution environment health; receiving, from an environment manager, an indication of a recommendation from the management platform that is based on the determined execution environment health; and configuring the execution environment according to the received recommendation, wherein the method is performed using one or more processors.

In some embodiments, a system for using one or more model orchestrators is provided. The system includes: one or more memories comprising instructions stored thereon; and one or more processors configured to execute the instructions and perform operations comprising: determining an execution environment state corresponding to an execution environment; providing, to a management platform, an indication of the determined execution environment state; receiving, from the management platform, a recommendation for the execution environment that is based on the execution environment state; and configuring the execution environment according to the received recommendation.

Depending upon embodiment, one or more benefits may be achieved. These benefits and various additional objects, features and advantages of the present invention can be fully appreciated with reference to the detailed description and accompanying drawings that follow.

### BRIEF DESCRIPTION OF THE DRAWINGS

FIG. 1 illustrates an example flow for software execution environment management according to certain embodiments of the present disclosure.
FIG. 2 illustrates a method for managing an execution environment by an environment manager according to certain embodiments of the present disclosure.
FIG. 3 illustrates a method for managing an execution environment by an execution manager entrypoint according to certain embodiments of the present disclosure.
FIG. 4 illustrates a method for managing an execution environment by a management platform according to certain embodiments of the present disclosure.
FIG. 5 illustrates a simplified diagram showing an example system in which the disclosed aspects may be implemented.
FIG. 6 illustrates a simplified diagram showing another example system in which the disclosed aspects may be implemented.
FIG. 7 depicts an example plugin interface that may be used to define a plugin that is used by an environment manager to manage a corresponding execution environment type according to aspects described herein.
FIG. 8 is a simplified diagram showing a computing system for implementing aspects of the present disclosure.

### DETAILED DESCRIPTION

Unless otherwise indicated, all numbers expressing feature sizes, amounts, and physical properties used in the specification and claims are to be understood as being modified in all instances by the term "about." Accordingly, unless indicated to the contrary, the numerical parameters set forth in the foregoing specification and attached claims are approximations that can vary depending upon the desired properties sought to be obtained by those skilled in the art utilizing the teachings disclosed herein. The use of numerical ranges by endpoints includes all numbers within that range (e.g., 1 to 5 includes 1, 1.5, 2, 2.75, 3, 3.80, 4, and 5) and any range within that range.

Although illustrative methods may be represented by one or more drawings (e.g., flow diagrams, communication flows, etc.), the drawings should not be interpreted as implying any requirement of, or particular order among or between, various steps disclosed herein. However, some embodiments may require certain steps and/or certain orders between certain steps, as may be explicitly described herein and/or as may be understood from the nature of the steps themselves (e.g., the performance of some steps may depend on the outcome of a previous step). Additionally, a "set," "subset," or "group" of items (e.g., inputs, algorithms, data values, etc.) may include one or more items and, similarly, a subset or subgroup of items may include one or more items. A "plurality" means more than one.

As used herein, the term "based on" is not meant to be restrictive, but rather indicates that a determination, identification, prediction, calculation, and/or the like, is performed by using, at least, the term following "based on" as an input. For example, predicting an outcome based on a particular piece of information may additionally, or alternatively, base the same determination on another piece of information. As used herein, the term "receive" or "receiving" means obtaining from a data repository (e.g., database), from another system or service, from another software, or from another software component in a same software. In certain embodiments, the term "access" or "accessing" means retrieving data or information, and/or generating data or information.

According to some embodiments, the systems and methods for software execution environment management use an environment manager and an execution manager entrypoint to enable a management platform to manage an execution environment. In an embodiment, the management platform receives an indication of a health and a state for a given execution environment, which it evaluates to determine an action for the execution environment accordingly. For example, the management platform may determine to upgrade the execution environment, to downgrade the execution environment, to request debug information, and/or to reconfigure the execution environment, among other examples. In some embodiments, the environment manager reports a state for one or more execution environments (e.g., as are managed by the environment manager) and the execution manager entrypoint reports a health for an execution environment associated therewith (e.g., in which the execution manager entrypoint may be executing).

As an example, existing technology is unable to manage a potentially varied and/or changing set of execution environments. For example, environment management may be limited to only a pre-existing set of environment types and may therefore not be extensible. Additionally, existing solutions may implement more rigid or fixed components with which environment state and/or health is reported, further complicating or otherwise rendering impossible the ability to extend such existing solutions to new or different execution environments. Further, existing solutions may be centralized, whereby state and/or health monitoring is controlled or otherwise enabled by software that is centrally managed, thereby further limiting extensibility. It will be appreciated that these and other deficiencies are addressed by aspects of the present disclosure.

According to certain embodiments, the environment manager uses a set of plugins to manage a corresponding set of execution environments, where each plugin is associated with an execution environment type (e.g., an installation type, an entity). For instance, an execution environment type may include a software application and/or platform. As an example, a first plugin is associated with a container runtime or host, such as DOCKER ENGINE (e.g., thus managing execution environments of a "container" type), thereby enabling management of one or more containers. As another example, a second plugin is associated with a platform-as-a-service, such as AMAZON ELASTIC COMPUTE CLOUD (EC2) or GOOGLE CLOUD PLATFORM (e.g., thus managing execution environments of a "platform-as-a-service instance" type), thereby enabling management of one or more cloud instances. As a further example, a third plugin is associated with a service that is executing on a computing device (e.g., thus managing execution environments of a "service" type), thereby enabling management of the service. Accordingly, the environment manager communicates with or otherwise uses such a plugin to obtain a state for the execution environment, to upgrade or downgrade the execution environment, to obtain debugging information, and/or to reconfigure the execution environment, among other examples. In some examples, the environment manager provides a heartbeat signal to the management platform, thereby confirming to the management platform that the environment manager is operating normally.

As used herein, example execution environments include, but are not limited to, a container and/or any of a variety of other software installations (e.g., as may be installed on a physical computing device or a virtual machine). Thus, it will be appreciated that an execution environment may have one or more software packages executing therein.

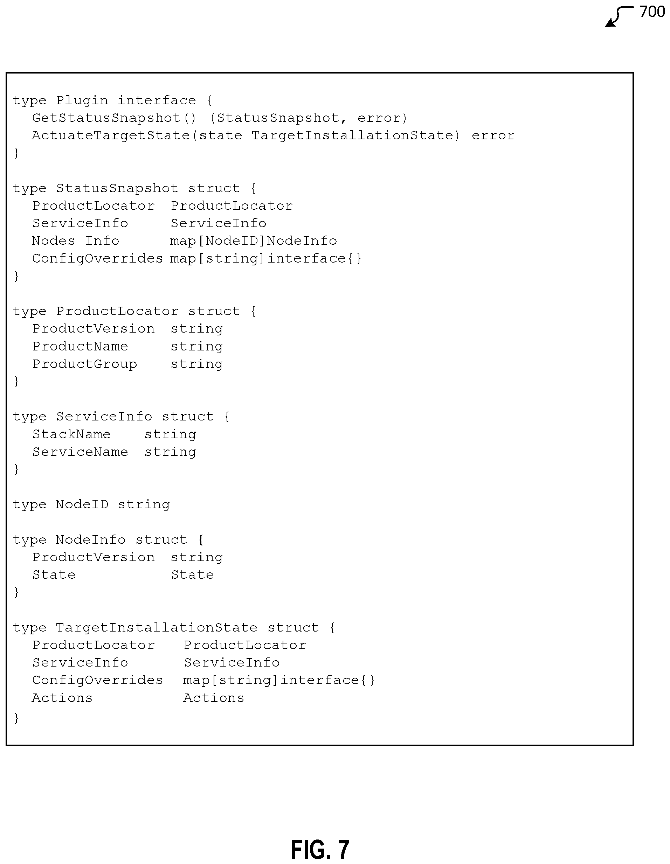

A plugin used by an environment manager to manage an execution environment may be developed by an entity associated with the execution environment (e.g., by DOCKER, AMAZON, or GOOGLE, in the above examples), may be developed by an entity associated with a management platform (e.g., for which the environment manager manages the execution environment), and/or may be developed by an entity that uses the execution environment, among other examples. Thus, it will be appreciated that such a plugin may implement an interface (e.g., a plugin interface) defined by or otherwise associated with the environment manager, thereby enabling the environment manager to use the plugin to manage the execution environment according to aspects described herein. An example of such an interface is depicted in Figure 7.

According to aspects described herein, an execution manager entrypoint may execute within (e.g., in the context of a container or a virtual machine), alongside, or otherwise in association with an execution environment. In examples, each execution environment has an associated execution manager entrypoint that provides a health indication to a management platform according to aspects described herein, among other examples. For example, the execution manager entrypoint executes within a container to provide an indication of a health associated with the container to a management platform as described above. As another example, the execution manager entrypoint executes on a virtual machine or a physical computing device to report a health of one or more services executing thereon.

According to some embodiments, an environment manager configures aspects of an execution manager entrypoint (e.g., via a plugin). For instance, the execution manager entrypoint may receive an indication from an environment manager that indicates a configuration to be "rendered" or otherwise implemented by the execution manager entrypoint. The execution manager entrypoint may thus access the indicated configuration and configure aspects of the execution environment accordingly.

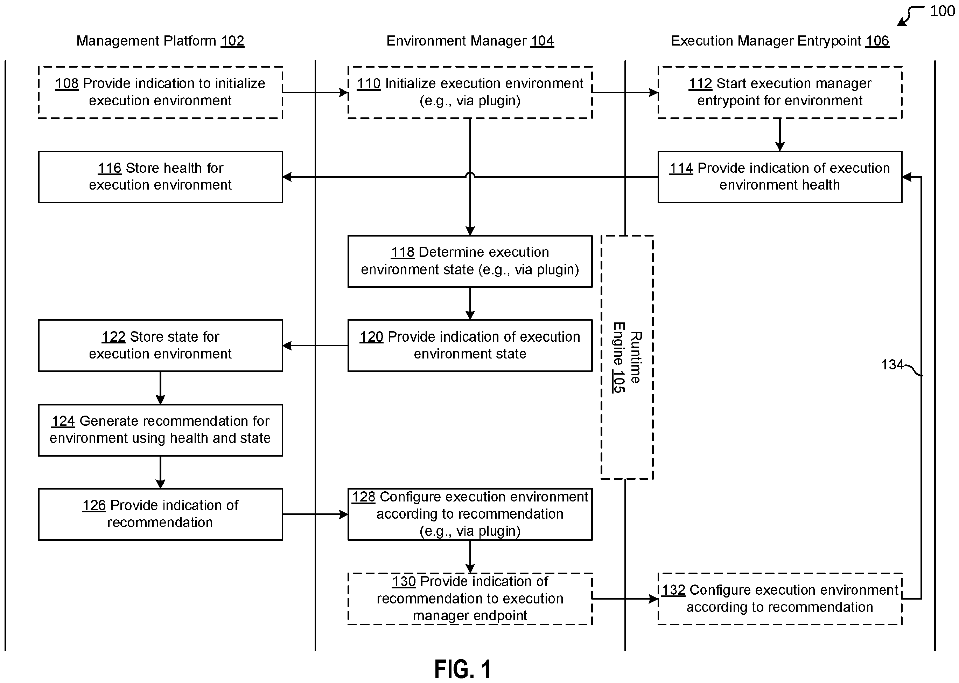

Figure 1 is a simplified diagram showing an example flow 100 for software execution environment management according to certain embodiments of the present disclosure. This diagram is merely an example. One of ordinary skill in the art would recognize many variations, alternatives, and modifications.

As illustrated, flow 100 occurs between management platform 102, environment manager 104, and execution manager entrypoint 106. In embodiments, management platform 102 may comprise one or more server computer devices, while environment manager 104 and execution manager entrypoint 106 may each execute on the same or a different computing device. For example, environment manager 104 may manage execution environments of a plurality of computing devices from one of the plurality of computing devices or from another computing device, among other examples.

As noted above, management platform 102 may manage one or more execution environments via environment manager 104 and execution manager entrypoint 106. For instance, environment manager 104 may report a state for an execution environment to management platform 102, while execution manager entrypoint 106 may report an associated health. Management platform 102 may thus generate a recommendation based on the received state and/or health according to aspects described herein.

Further, aspects of flow 100 may be used to manage and number of execution environments. For example, management platform 102 may manage one or more environment managers, each of which may in turn manage one or more execution environments (e.g., that each have an associated execution manager entrypoint).

In some instances, an execution environment includes an instance of an application executed by a runtime engine 105 (e.g., a container runtime engine, a virtual machine instance). For example, the execution environment includes a container that is hosted by a runtime engine, such as runtime engine 105. In such an example, environment manager 104 may use a plugin corresponding to runtime engine 105 to manage the execution environment according to aspects described herein.

As illustrated, at operation 108, an indication to initialize an execution environment is provided from management platform 102 to environment manager 104. In examples, the indication includes an execution environment name, an execution environment type, and indication of an associated plugin, among any of a variety of additional or alternative configuration information.

Accordingly, at operation 110, environment manager 104 initializes the execution environment according to the indication that was received from management platform 102. In examples, operation 110 comprises obtaining data associated with the indicated environment, such as one or more software packages and/or a system image. In some instances, operation 110 comprises providing an indication to a plugin corresponding to the indicated environment type, such that the plugin initializes the execution environment accordingly. As an example, an indication may be provided to a plugin associated with runtime engine 105, such that the plugin configures runtime engine 105 to initialize and ultimately manage execution of a container accordingly.

Flow progresses to operation 112, where an execution manager entrypoint (e.g., execution manager entrypoint 106) is started for the execution environment. In examples, execution manager entrypoint 106 is started as a result of executing the execution environment (e.g., as may be managed by runtime engine 105). In other examples, execution manager entrypoint 106 is started alongside (e.g., before, contemporaneously with, or after) the execution environment. For example, execution manager entrypoint 106 may be started alongside (or may start) one or more services for which execution manager entrypoint 106 is to report health information.

Accordingly, at operation 114, execution manager entrypoint 106 provides an indication of execution environment health to management platform 102, which is stored by management platform 102 at operation 116. Examples of health information include, but are not limited to, healthy, unhealthy, or degraded, among other examples. It will be appreciated that, in other examples, a health for an execution environment may additionally or alternatively include a score within a predetermined range, where a score below a predetermined threshold may indicate a degraded or unhealthy health for the execution environment.

In examples, the health indication is provided to a uniform resource identifier (URI) or uniform resource locator (URL) associated with management platform 102. For example, the URL may be defined by an application programming interface (API) that is implemented by management platform 102. As another example, the indication may be provided to management platform 102 with authentication credentials (e.g., a username/password, a token, or a cryptographic hash or signature), which may be validated by management platform 102 at operation 116 accordingly.

In embodiments, execution manager entrypoint 106 evaluates the execution of one or more software packages of the execution environment to determine an associated health, which is provided to management platform 102. As another example, execution manager entrypoint 106 calls a configured Hypertext Transport Protocol (HTTP) endpoint (e.g., of software of the execution environment) and provides an indication of the response (e.g., a status code) to management platform 102.

In some instances, as a result of starting execution manager entrypoint 106, execution manager entrypoint 106 renders or otherwise implements a configuration, as may have been specified by execution manager 104 and/or a plugin associated therewith. For example, execution manager entrypoint 106 may obtain the configuration based on an indication that is received from environment manager 104 (e.g., as may be stored at a location that is accessible to execution manager entrypoint 106), such that execution manager entrypoint 106 affects the configuration of the execution environment accordingly. The configuration may be one or more files and/or environment variables, among other examples.

Operations 108, 110, and 112 are illustrated using dashed boxes to indicate that, in other examples, one or more such operations may be omitted. For example, an execution environment may already be initialized and/or may already be executing, such that execution manager entrypoint 106 may periodically provide an indication of execution environment health accordingly (e.g., as was described above at operation 114).

As illustrated, flow 100 also progresses from operation 110 to operation 118 (e.g., contemporaneously with operation 114 and/or 116 as were described above), where an execution environment state is determined. As illustrated, the state may be determined and/or communicated by a plugin (e.g., a plugin run in the runtime engine 105) in some examples. For example, environment manager 104 may request an environment state from an associated plugin, such that the plugin determines the state and provides an indication to environment manager 104 accordingly. In other examples, environment manager 104 evaluates an execution environment (e.g., in addition to or as an alternative to such an evaluation by a plugin) to determine an associated state accordingly. In instances where environment manager 104 manages multiple execution environments, operation 118 may comprise identifying a plugin corresponding to an associated execution environment type, such that the identified plugin is used for determining a state of the execution environment accordingly. It will be appreciated that the same plugin may be used for multiple execution environments, each having the same execution environment type.

At operation 120, an indication of the determined execution environment state is provided to management platform 102, where it is stored at operation 122. Example states include, but are not limited to, offline, online, starting, rebooting, upgrading, and/or downgrading, among other examples. In certain embodiments, environment manager 104 additionally or alternatively provides an indication of a set of expected execution environments to management platform 102, such that management platform 102 may determine a set of entities for which health information (e.g., as may be received from an execution manager entrypoint) is expected. In some embodiments, an entity refers to an application type (e.g., an installation type, a software instance, etc.). As another example, the state information additionally or alternative includes metadata about an execution environment, such as how many instances of the execution environment there are, a version number associated with each execution environment, and/or an associated execution environment name and/or type, among other metadata. As noted above, environment manager 104 may additionally or alternatively provide a heartbeat indication to management platform 102 in some examples, thereby enabling management platform 102 to determine that environment manager 104 is operating normally (e.g., that environment manager 104 is functioning and/or is in communication with management platform 102).

In examples, operation 120 comprises providing the state information, set of expected entities, and/or any of a variety of other information to an API of management platform 102 (e.g., via an associated URI or URL). Similar to operation 114, the indication may be provided in association with one or more credentials, such that management platform 102 may validate the credentials as part of processing the received information.

In some instances, the state information is provided as part of a request for a recommendation from management platform 102, such that management platform 102 determines the recommendation based on the state information. In other examples, the state information is provided separately from such a request.

While operations 114 and 120 are described in an example where information is provided to management platform 102, it will be appreciated that, in other examples, one or both such operations may instead comprise receiving a request from management platform 102, in response to which such information is provided. For example, execution manager entrypoint 106 and/or environment manager 104 may expose an HTTP endpoint that may be accessed by management platform 102 accordingly. It will therefore be appreciated that health information and state information may be obtained by management platform 102 according to any of a variety of techniques.

At operation 124, management platform 102 generates a recommendation based on the health information (e.g., as was received at operation 116) and the state information (e.g., as was received at operation 122). In examples, management platform 102 generates a recommendation for each environment for which health and state information was received. For instance, environment manager 104 may manage multiple execution environments (each of which may have an associated execution manager entrypoint that reports associated health information), such that the state information that was received at operation 122 corresponds to multiple such execution environments.

Example recommendations include, but are not limited to, a recommendation to upgrade an execution environment, a recommendation to downgrade an execution environment, a recommendation to change (e.g., install, upgrade, downgrade, or remove) a software package of an execution environment, a recommendation to initialize an execution environment (e.g., similar to operation 110), a recommendation to restart an execution environment, a recommendation to shut down an execution environment, a recommendation to start another instance of an execution environment, and/or a recommendation to delete an execution environment.

It will be appreciated that operation 124 may comprise any of a variety of techniques to generate the recommendation, for example based on a set of rules, a condition tree, or using a machine learning model. In some examples, the machine learning model is a language model ("LM") that may include an algorithm, rule, model, and/or other programmatic instructions that can predict the probability of a sequence of words. In some embodiments, a language model may, given a starting text string (e.g., one or more words), predict the next word in the sequence. In certain embodiments, a language model may calculate the probability of different word combinations based on the patterns learned during training (based on a set of text data from books, articles, websites, audio files, etc.). In some embodiments, a language model may generate many combinations of one or more next words (and/or sentences) that are coherent and contextually relevant. In certain embodiments, a language model can be an advanced artificial intelligence algorithm that has been trained to understand, generate, and manipulate language. In some embodiments, a language model can be useful for natural language processing, including receiving natural language prompts and providing natural language responses based on the text on which the model is trained. In certain embodiments, a language model may include an n-gram, exponential, positional, neural network, and/or other type of model.

In examples, the machine learning model is a large language model (LLM), which was trained on a larger data set and has a larger number of parameters (e.g., billions of parameters) compared to a regular language model. In certain embodiments, an LLM can understand more complex textual inputs and generate more coherent responses due to its extensive training. In certain embodiments, an LLM can use a transformer architecture that is a deep learning architecture using an attention mechanism (e.g., which inputs deserve more attention than others in certain cases). In some embodiments, a language model includes an autoregressive language model, such as a Generative Pre-trained Transformer 3 (GPT-3) model, a GPT 3.5-turbo model, a Claude model, a command-xlang model, a bidirectional encoder representations from transformers (BERT) model, a pathways language model (PaLM) 2, and/or the like. Thus, a prompt including the health and state may be provided for processing by the LLM, which thus generates a recommendation accordingly.

Accordingly, an indication of the generated recommendation is provided by management platform 102 to environment manager 104 at operation 126, such that the execution environment is configured according to the recommendation at operation 128. In examples, an indication of at least a part of the recommendation is provided by environment manager 104 to a plugin corresponding to the type of execution environment for which the recommendation was received (e.g., runtime engine 105), such that the plugin configures the execution environment accordingly. Additionally, or alternatively, environment manager 104 processes at least a part of the recommendation to configure the execution environment based on the recommendation.

In some examples, flow progresses to operation 130, where an indication of the recommendation is additionally, or alternatively, provided to execution manager entrypoint 106 (e.g., via the associated plugin), such that execution manager entrypoint 106 configures the execution environment according to the recommendation at operation 132. Such aspects may be similar to aspects that were discussed above with respect to operation 112 and are therefore not necessarily redescribed in detail.

Operations 130 and 132 are illustrated using dashed boxes to indicate that, in some examples, operations 130 and 132 may be omitted, as may be the case when the plugin and/or environment manager 104 is capable to implementing the recommendation without processing by execution manager entrypoint 106.

Arrow 134 is illustrated from operation 132 to operation 114 (or, in another example, from operation 128 to operation 114) to indicate that aspects of flow 100 may be iteratively performed. For example, execution manager entrypoint 106 periodically performs aspects of operation 114 (e.g., every 30 seconds or every minute), while environment manager 104 periodically performs aspects of operations 118 and 120. In such examples, it will be appreciated that a recommendation may not be received from management platform 102 for some iterations of flow 100. For instance, management platform 102 may evaluate the state and/or health information and may determine that a recommendation need not be generated. Thus, certain iterations of flow 100 may omit operations 124, 126, 128, 130, and/or 132 among other examples.

Although example flow 100 has been shown using a selected group of processes, it will be appreciated that there can be many alternatives, modifications, and variations. For example, some of the processes may be expanded and/or combined. Other processes may be inserted into those noted above. Depending upon the embodiment, the sequence of processes may be interchanged with others replaced. Further details of these processes are found throughout the present disclosure. Additionally, while aspects are described in relation to management platform 102, environment manager 104 (and/or an associated plugin), and execution manager entrypoint 106, it will be appreciated that similar aspects may additionally or alternatively be performed by any of a variety of other such elements.

In certain examples, some or all processes (e.g., steps) of flow 100 are performed by a computer and/or a processor directed by a code. For example, a computer includes a server computer and/or a client computer (e.g., a personal computer). In some examples, some or all processes (e.g., steps) of flow 100 are performed according to instructions included by a non-transitory computer-readable medium (e.g., in a computer program product, such as a computer-readable flash drive). For example, a non-transitory computer-readable medium is readable by a computer including a server computer and/or a client computer (e.g., a personal computer, and/or a server rack). As an example, instructions included by a non-transitory computer-readable medium are executed by a processor including a processor of a server computer and/or a processor of a client computer (e.g., a personal computer, and/or server rack).

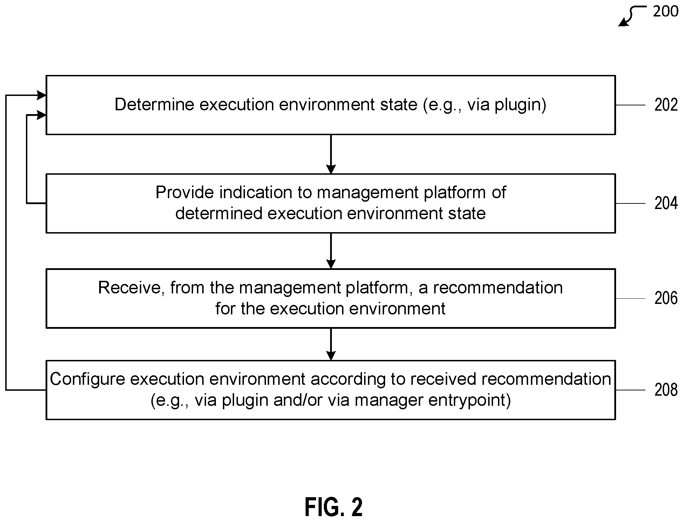

Figure 2 is a simplified diagram showing a method 200 for managing an execution environment by an environment manager (e.g., environment manager 104 in Figure 1) according to certain embodiments of the present disclosure. This diagram is merely an example. One of ordinary skill in the art would recognize many variations, alternatives, and modifications.

As illustrated, at operation 202, an execution environment state is determined. Aspects of operation 202 may be similar to those discussed above with respect to operation 118 in Figure 1. For example, the execution environment state may be determined using a plugin associated with the execution environment. As an example, an environment state may be requested from an associated plugin, such that the plugin determines the state and provides an indication in response. Additionally, or alternatively, operation 202 may comprise evaluating the execution environment to determine an associated state accordingly. In instances where multiple execution environments are managed, operation 202 may comprise identifying a plugin corresponding to an associated execution environment type for each execution environment, such that the identified plugin is used for determining a state of each execution environment accordingly. It will be appreciated that the same plugin may be used for multiple execution environments, each having the same execution environment type.

At operation 204, an indication of the determined execution environment state is provided to a management platform (e.g., management platform 102 in Figure 1). Aspects of operation 204 may be similar to those discussed above with respect to operation 120 in Figure 1. For example, operation 204 comprises providing the state that was determined at operation 202, an indication of a set of expected execution environments (e.g., which may be used to determine a set of entities for which health information is expected), metadata about an execution environment (e.g., how many instances of the execution environment there are, a version number associated with each execution environment, and/or an associated execution environment name and/or type), and/or a heartbeat indication (e.g., to indicate that the environment manager is operating normally).

In examples, operation 204 comprises providing the indication to an API of a management platform (e.g., via an associated URI or URL). In some instances, the indication may be provided in association with one or more credentials, which may be validated by the management platform accordingly. In certain embodiments, the state information is provided as part of a request for a recommendation from the management platform, such the management platform generates a recommendation based on the state information accordingly. In other examples, operation 204 comprises providing the state information separately from such a request.

While operations 204 is described as an example where information is provided to the management platform, it will be appreciated that, in other examples, a request for the state information may be received from the management platform, such that the state information is provided in response. It will therefore be appreciated that state information may be made available to a management platform according to any of a variety of techniques.

An arrow is illustrated from operation 204 to operation 202 to indicate that, in some examples, multiple instances of execution environment state information may be provided to the management platform, for which a recommendation is not received in response. For example, a configuration associated with the execution environment may remain unchanged, such that the execution environment need not be reconfigured. As another example, state information and/or health information for the execution environment may indicate nominal operation of the execution environment, such that a remedial action need not be performed. In examples, method 200 loops between operations 202 and 204 to periodically provide state information to the management platform. For example, state information may be provided to the management platform every 30 seconds or every minute, among other examples.

Eventually, flow progresses to operation 206, where a recommendation is received from the management platform. As noted above, the recommendation may be received in response to providing the state information to the management platform or may be received in response to a separate request, among other examples. In examples, the recommendation includes a set of operations to be performed to configure the execution environment. In other examples, the recommendation includes a configuration to be applied to the execution environment.

At operation 208, the execution environment is configured according to the received recommendation. Aspects of operation 208 may be similar to those discussed above with respect to operation 128 in Figure 1. For example, an indication of at least a part of the recommendation may be provided to a plugin corresponding to the type of execution environment for which the recommendation was received (e.g., a runtime engine, such as runtime engine 105 in Figure 1). As a result, the plugin may configure the execution environment based on the recommendation accordingly. Additionally, or alternatively, at least a part of the recommendation may be processed at operation 208, thereby configuring the execution environment based on the recommendation.

Additionally, or alternatively, at least a part of the recommendation may be rendered or otherwise implemented by an execution manager entrypoint of the environment (e.g., execution manager entrypoint 106 in Figure 1). Such aspects may be similar to those discussed above with respect to operations 130 and 132 and are therefore not necessarily redescribed in detail.

For example, aspects of operation 208 may comprise upgrading the execution environment, downgrading the execution environment, restarting the execution environment, and/or obtaining debugging information from the execution environment, among other examples. As illustrated, method 200 may loop from operation 208 to operation 202, such that state information is provided to the management platform and/or a recommendation is implemented periodically according to aspects described herein. Further, while operations 202 and 204 are illustrated as occurring before operations 206 and 208, it will be appreciated that state information may be provided contemporaneously with such aspects.

Although example method 200 has been shown using a selected group of processes, it will be appreciated that there can be many alternatives, modifications, and variations. For example, some of the processes may be expanded and/or combined. Other processes may be inserted into those noted above. Depending upon the embodiment, the sequence of processes may be interchanged with others replaced. Further details of these processes are found throughout the present disclosure.

In certain examples, some or all processes (e.g., steps) of method 200 are performed by a computer and/or a processor directed by a code. For example, a computer includes a server computer and/or a client computer (e.g., a personal computer). In some examples, some or all processes (e.g., steps) of method 200 are performed according to instructions included by a non-transitory computer-readable medium (e.g., in a computer program product, such as a computer-readable flash drive). For example, a non-transitory computer-readable medium is readable by a computer including a server computer and/or a client computer (e.g., a personal computer, and/or a server rack). As an example, instructions included by a non-transitory computer-readable medium are executed by a processor including a processor of a server computer and/or a processor of a client computer (e.g., a personal computer, and/or server rack).

As another example, in a first step, an environment manager (e.g., environment manager 104 in Figure 1) may read or otherwise obtain a configuration. The configuration may include an indication as to one or more enabled plugins, how each plugin is configured, a URL for a management platform (e.g., management platform 102), and/or an authentication mechanism and/or associated credentials. In a second step, the environment manager may call each plugin to obtain a state for one or more associated execution environments, such that the state of the execution environments is obtained in response. In a third step, the environment manager may communicate with the management platform (e.g., via an API) to obtain a recommendation according to aspects described herein. In examples, the environment manager provides the state of the execution environments that was obtained at step two. In response, the environment manager may receive a recommendation for one or more of the execution environments (e.g., to upgrade or downgrade an execution environment). Accordingly, in a fourth step, the environment manager may provide at least a part of the recommendation to a plugin, such that, in a fifth step, the plugin inspects the recommendation and performs one or more operations accordingly. For example, the plugin may reconcile a current state of an execution environment with a target state indicated by the recommendation. As another example, in an instance where the plugin is for a "container" execution environment type, the plugin may stop the existing execution environment and start a new execution environment (e.g., having an updated version as was indicated by the recommendation). In examples, such steps may be performed in a control loop, for example where they are iteratively performed according to a predetermined time interval (e.g., every 30 seconds or one minute).

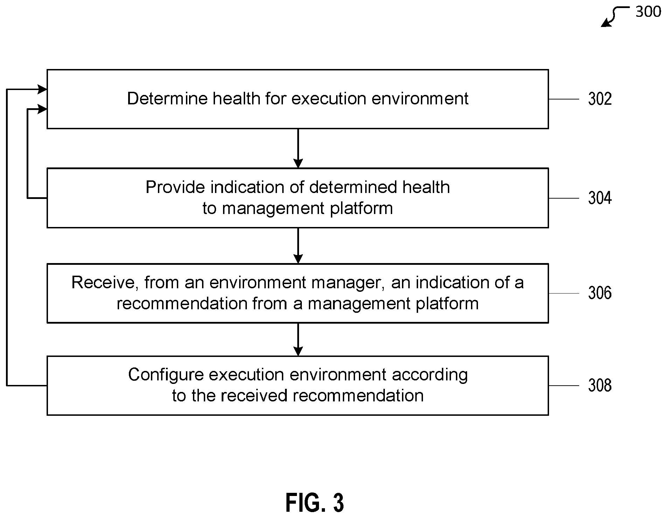

Figure 3 is a simplified diagram showing a method 300 for managing an execution environment by an execution manager entrypoint (e.g., execution manager entry point 106 in Figure 1) according to certain embodiments of the present disclosure. This diagram is merely an example. One of ordinary skill in the art would recognize many variations, alternatives, and modifications.

As illustrated, at operation 302, a health is determined for an execution environment. Aspects of operation 302 may be similar to those discussed above with respect to operation 114 in Figure 1. As noted above, examples of health information include, but are not limited to, healthy, unhealthy, or degraded, among other examples. It will be appreciated that, in other examples, a health for an execution environment may additionally or alternatively include a score within a predetermined range, where a score below a predetermined threshold may indicate a degraded or unhealthy health for the execution environment.

In certain embodiments, operation 302 comprises evaluating the execution of one or more software packages of the execution environment to determine an associated health. As another example, operation 302 comprises calling a configured Hypertext Transport Protocol (HTTP) endpoint (e.g., of software of the execution environment) such that a status code that is received in response may be used to determine or may otherwise be a part of the determined health information for the execution environment.

Method 300 progresses to operation 304, where an indication of the determined health information is provided to a management platform (e.g., management platform 102 in Figure 1). Aspects of operation 304 may be similar to those discussed above with respect to operation 114 in Figure 1. For example, a request may be generated using a URI or URL that is associated with an API implemented by the management platform. In some examples, the indication is provided in conjunction with authentication credentials that may be validated by the management platform accordingly.

An arrow is illustrated from operation 304 to operation 302 to indicate that, in some examples, multiple instances of health information may be provided to the management platform (e.g., for which a recommendation is not received in response). For example, a configuration associated with the execution environment may remain unchanged, such that the execution environment need not be reconfigured. As another example, state information and/or health information for the execution environment may indicate nominal operation of the execution environment, such that a remedial action need not be performed. In examples, method 300 loops between operations 302 and 304 to periodically provide health information to the management platform. For example, health information may be provided to the management platform every 30 seconds or every minute, among other examples.

Eventually, flow progresses to operation 306, where an indication of a recommendation from the management platform is received. Aspects of operation 306 may be similar to those discussed above with respect to operation 130 in Figure 1. The indication may be received from an environment manager (e.g., environment manager 104 in Figure 1) and/or a plugin associated therewith. As noted above, the recommendation may include a set of operations to be performed to configure the execution environment and/or a configuration to be applied to the execution environment, among other examples.

At operation 308, the execution environment is configured according to the received recommendation. Aspects of operation 308 may be similar to those discussed above with respect to operation 132 in Figure 1. In examples, a configuration of the execution is updated and/or at least a part of the recommendation is executed, among other examples.

As illustrated, method 300 may loop from operation 308 to operation 302, such that health information is provided to the management platform and/or a recommendation is implemented periodically according to aspects described herein. Further, while operations 302 and 304 are illustrated as occurring before operations 306 and 308, it will be appreciated that health information may be provided contemporaneously with such aspects.

In instances where an environment manager manages multiple execution environments, a management platform may receive varying reports of health information as a result of associated execution manager entrypoints performing aspects of flow 300 according to aspects described herein. For example, the management platform may provide a recommendation to upgrade an execution environment, at which point a first subset of execution environments report health information that indicates an upgraded version (and/or the environment manager reports state information that similarly indicates the upgraded version), while a second subset of execution environments are indicated as having health and/or state information corresponding to the previous version.

Although example method 300 has been shown using a selected group of processes, it will be appreciated that there can be many alternatives, modifications, and variations. For example, some of the processes may be expanded and/or combined. Other processes may be inserted into those noted above. Depending upon the embodiment, the sequence of processes may be interchanged with others replaced. Further details of these processes are found throughout the present disclosure.

In certain examples, some or all processes (e.g., steps) of method 300 are performed by a computer and/or a processor directed by a code. For example, a computer includes a server computer and/or a client computer (e.g., a personal computer). In some examples, some or all processes (e.g., steps) of method 300 are performed according to instructions included by a non-transitory computer-readable medium (e.g., in a computer program product, such as a computer-readable flash drive). For example, a non-transitory computer-readable medium is readable by a computer including a server computer and/or a client computer (e.g., a personal computer, and/or a server rack). As an example, instructions included by a non-transitory computer-readable medium are executed by a processor including a processor of a server computer and/or a processor of a client computer (e.g., a personal computer, and/or server rack).

As another example, in a first step, an execution manager entrypoint (e.g., execution manager entrypoint 106 in Figure 1) may read or otherwise obtain a configuration (e.g., as one or more configuration files and/or environment variables). For example, the configuration indicates what execution environment type is associated with the execution manager entrypoint, how to determine an associated health, a URL for a management platform (e.g., management platform 102), and/or an authentication mechanism and/or associated credentials. In some examples, at least a part of the configuration is configured by a plugin that corresponds to the execution environment type for which the execution manager entrypoint is being used. In a second step, the execution manager entrypoint renders at least a part of the configuration. For example, the execution manager entrypoint may manage one or more configuration files and/or environment variables of the execution environment, among other examples. In a third step, if it is determined that the execution environment has not yet been started, the execution manager entrypoint starts execution of the execution environment. Accordingly, in a fourth step, the execution manager entrypoint determines a health for the execution environment according to aspects described herein (e.g., the execution environment manager may call an HTTP endpoint and check the status code), such that the determined health is reported to the management platform accordingly. In examples, such steps may be performed in a control loop, for example where they are iteratively performed according to a predetermined time interval (e.g., every 30 seconds or one minute).

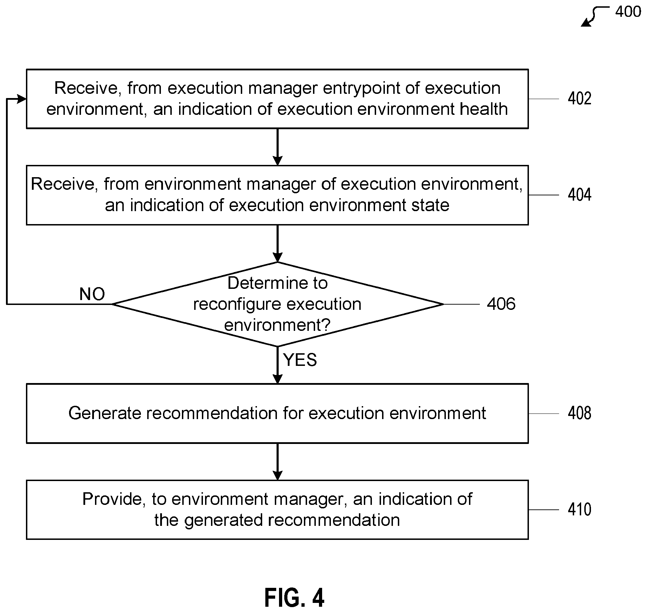

Figure 4 is a simplified diagram showing a method 400 for managing an execution environment by a management platform (e.g., management platform 102 in Figure 1) according to certain embodiments of the present disclosure. This diagram is merely an example. One of ordinary skill in the art would recognize many variations, alternatives, and modifications.

As illustrated, at operation 402, an indication of execution environment health is received. Aspects of operation 402 may be similar to those discussed above with respect to operation 116 in Figure 1. For example, the health information may be received as a result of an execution manager entrypoint (e.g., execution manager entrypoint 106 in Figure 1) performing aspects of method 300 discussed above with respect to Figure 3.

Similarly, at operation 404, an indication of an execution environment state is received. Aspects of operation 404 may be similar to those discussed above with respect to operation 122 in Figure 1. For example, the state information may be received as a result of an environment manager (e.g., environment manager 104 in Figure 1) performing aspects of method 200 discussed above with respect to Figure 2.

Accordingly, at determination 406, it is determined whether to reconfigure the execution environment. In examples, the determination is based on determining whether a user indication has been received to reconfigure the execution environment and/or based on the health information and/or state information that was received at operations 402 and 404, respectively, among other examples. If it is determined not to reconfigure the execution environment, flow branches "NO" and returns to operation 402, such that method 400 loops between operations 402 and 404 while it is determined that the execution environment need not be reconfigured. In examples, method 400 comprises storing the received health information and/or state information for subsequent processing.

If, however, it is determined to reconfigure the execution environment at determination 406, flow instead branches "YES" to operation 408, where a recommendation is generated for the execution environment. Aspects of operation 410 may be similar to those discussed above with respect to operation 124 in Figure 1. As noted above, the recommendation may comprise a configuration and/or a set of operations to be performed by an environment manager, a plugin associated with the execution environment type, and/or an execution manager entrypoint, among other examples.

Accordingly, at operation 410, an indication of the generated recommendation is provided to the environment manager (e.g., environment manager 104 in Figure 1). Aspects of operation 410 may be similar to those discussed above with respect to operation 126 in Figure 1. In other examples, operations 402 and 404 are performed contemporaneously with reconfiguration of the execution environment (e.g., as may be performed as a result of performing aspects of operations 206 and 208 in Figure 2 and operations 306 and 308 in Figure 3).

Although example method 400 has been shown using a selected group of processes, it will be appreciated that there can be many alternatives, modifications, and variations. For example, some of the processes may be expanded and/or combined. Other processes may be inserted into those noted above. Depending upon the embodiment, the sequence of processes may be interchanged with others replaced. Further details of these processes are found throughout the present disclosure.

In certain examples, some or all processes (e.g., steps) of method 400 are performed by a computer and/or a processor directed by a code. For example, a computer includes a server computer and/or a client computer (e.g., a personal computer). In some examples, some or all processes (e.g., steps) of method 400 are performed according to instructions included by a non-transitory computer-readable medium (e.g., in a computer program product, such as a computer-readable flash drive). For example, a non-transitory computer-readable medium is readable by a computer including a server computer and/or a client computer (e.g., a personal computer, and/or a server rack). As an example, instructions included by a non-transitory computer-readable medium are executed by a processor including a processor of a server computer and/or a processor of a client computer (e.g., a personal computer, and/or server rack).

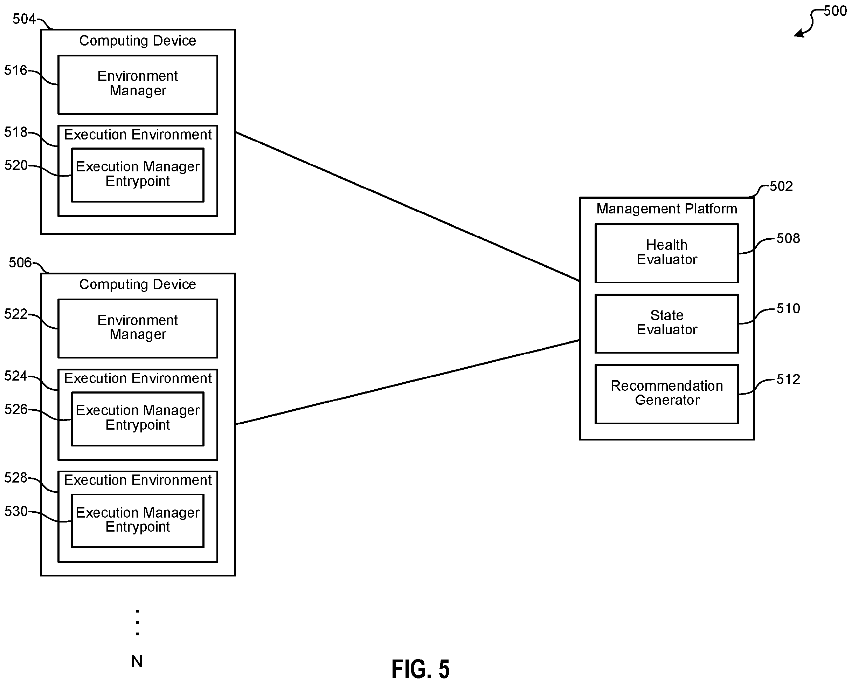

Figure 5 is a simplified diagram showing an example system 500 in which the disclosed aspects may be implemented. It will be appreciated that this diagram is merely an example. One of ordinary skill in the art would recognize many variations, alternatives, and modifications. For example, some of the components may be expanded and/or combined. Other components may be inserted into those noted above. Depending upon the embodiment, the arrangement of components may be interchanged with others replaced. Further details of these components are found throughout the present disclosure.

As illustrated, system 500 includes management platform 502, computing device 504, and computing device 506. Aspects of management platform 502 may be similar to those discussed above with respect to management platform 102 and are therefore not necessarily redescribed below. It will be appreciated that computing devices 504 and 506 may each be any of a variety of computing devices. Further, computing device 504 may be physical computing devices or may be virtual machines, among other examples.

As illustrated, management platform 502 includes health evaluator 508, state evaluator 510, and recommendation generator 512. In examples, health evaluator 508 evaluates health information associated with an execution environment (e.g., as may be received from execution manager entrypoints 520, 526, and/or 530). Similarly, state evaluator 510 evaluates state information for one or more execution environments, as may be received from environment manager 516 and/or environment manager 522.

Accordingly, recommendation generator 512 generates a recommendation based on the state information and/or health information associated with an execution environment. For example, recommendation generator 512 may perform aspects similar to those discussed above with respect to method 400 of Figure 4. A generated recommendation may be provided to environment manager 516 and/or environment manager 522 for application to one or more execution environments associated therewith according to aspects described herein.

Computing device 504 includes environment manager 516 and execution environment 518. Aspects of computing device 506 are similar those of computing device 504 and are therefore not necessarily redescribed in detail. For example, environment manager 522 may be similar to environment manager 516, while execution environments 524 and 528 (and associated execution manager entrypoints 526 and 530, respectively) may be similar to execution environment 518 (and associated execution manager entrypoint 520). In examples, aspects of environment manager 516 are similar to those discussed above with respect to environment manager 104 in Figure 1. Similarly, aspects of execution manager entrypoint 520 may be similar to those discussed above with respect to execution manger entrypoint 106 in Figure 1.

For example, environment manager 516 generates state information for execution environments of computing device 504 (e.g., execution environment 518), which is provided to management platform 502 accordingly. Environment manager 516 may thus perform aspects similar to those discussed above with respect to method 200 in Figure 2. In examples, environment manager 516 uses one or more plugins to manage such execution environments, each of which may be associated with a given execution environment type.

In certain embodiments, execution manager entrypoint 520 generates health information for an associated execution environment (e.g., execution environment 520). The health information may be provided to management platform 502 accordingly. Execution manager entrypoint 520 may thus perform aspects similar to those discussed above with respect to method 300 of Figure 3.

In some examples, environment manager 516 evaluates a recommendation that was received from management platform 502 to manage execution environment 518 according to aspects described herein. For example, environment manager 516 may use a plugin to manage execution environment 518. In some examples, at least a part of the recommendation may be provided to execution manager entrypoint 520, thereby causing execution manager entrypoint 520 to manage aspects of execution environment 518 accordingly.

As compared to computing device 504, computing device 506 comprises an additional execution environment. Thus, it will be appreciated that an environment manager may manage any number of execution environments according to aspects described herein. Further, while computing devices 504 and 506 are each illustrated as comprising an environment manager, it will be appreciated that, in other examples, a single environment manager may manage execution environments across multiple computing devices. As another example, a single computing device may include multiple environment mangers, as may be the case when each environment manager has a different set of associated plugins and/or corresponds to different virtualization tenants, among other examples.

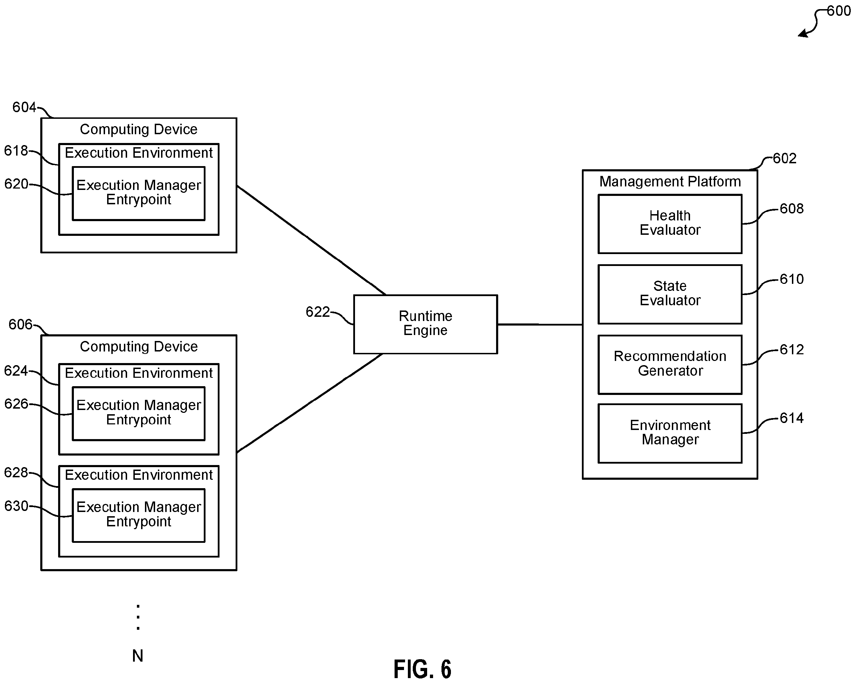

Figure 6 is a simplified diagram showing an example system 600 in which the disclosed aspects may be implemented. It will be appreciated that this diagram is merely an example. One of ordinary skill in the art would recognize many variations, alternatives, and modifications.

Aspects of Figure 6 are similar to Figure 5 and are therefore not necessarily redescribed below in detail. For example, aspects of management platform 602, computing device 604, and computing device 606 are similar to management platform 502, computing device 504, and computing device 506, respectively. Similarly, aspects of health evaluator 608, state evaluator 610, recommendation generator 612, environment manager 614, execution environment 618 (including execution manager entry point 620), execution environment 624 (including execution manager entrypoint 626), and execution environment 628 (including execution manager entrypoint 630) may be similar to health evaluator 508, state evaluator 510, recommendation generator 512, environment manager 516, execution environment 518, execution environment 524, and execution environment 528, respectively.

As compared to system 500, system 600 is illustrated as further comprising runtime engine 622 (e.g., container runtime engine), which may manage execution of execution environments 618, 624, and 626. Aspects of runtime engine 622 may be similar to those discussed above with respect to runtime engine 105 in Figure 1 and are therefore not necessarily redescribed in detail below.

Additionally, management platform 602 is illustrated as further comprising environment manager 614 (as compared to system 500, where computing devices 504 and 506 each included an environment manager). It will be appreciated that, in other examples, environment manager 614 need not be a part of management platform 602 and may instead be separate from management platform 602. For instance, as discussed above, system 500 depicted an example in which an environment manager was included by a computing device on which an execution environment was located. In further still examples, an environment manager may be part of any of a variety of other devices. In certain embodiments, environment manager 614 uses a plugin associated with runtime engine 622 to manage execution environments 618, 624, and 628 according to aspects described herein. For instance, environment manager 614 may generate state information for one or more of execution environments 618, 624, and/or 628, which may be processed by state evaluator 610 and/or recommendation generator 612 to generate a recommendation (e.g., based alternatively or additionally on health information obtained from execution manager entrypoint 620, 626, and/or 630) according to aspects described herein. The recommendation may be processed by environment manager 614 (and/or an associated plugin), such that operation of runtime engine 622 and the associated execution environments 618, 624, and/or 628 are affected accordingly.

In some cases, various components in system 500 or system 600 can execute software or firmware stored in non-transitory computer-readable medium to implement various processing steps. Various components and processors of system 500 or system 600 can be implemented by one or more computing devices including, but not limited to, circuits, a computer, a cloud-based processing unit, a processor, a processing unit, a microprocessor, a mobile computing device, and/or a tablet computer. In some cases, various components of system 500 or system 600 (e.g., recommendation generator 512 and 612) can be implemented on a shared computing device. Alternatively, a component of system 500 or system 600 can be implemented on multiple computing devices. In some implementations, various modules and components of system 500 or system 600 can be implemented as software, hardware, firmware, or a combination thereof. In some cases, various components of system 500 or system 600 can be implemented in software or firmware executed by a computing device.

Various components of system 500 or system 600 can communicate via or be coupled to via a communication interface, for example, a wired or wireless interface. The communication interface includes, but is not limited to, any wired or wireless short-range and long-range communication interfaces. The short-range communication interfaces may be, for example, local area network (LAN), interfaces conforming known communications standard, such as Bluetooth^{®} standard, IEEE 802 standards (e.g., IEEE 802.11), a ZigBee^{®} or similar specification, such as those based on the IEEE 802.15.4 standard, or other public or proprietary wireless protocol. The long-range communication interfaces may be, for example, wide area network (WAN), cellular network interfaces, satellite communication interfaces, etc. The communication interface may be either within a private computer network, such as intranet, or on a public computer network, such as the internet.

Figure 7 depicts an example plugin interface 700 that may be used to define a plugin that is used by an environment manager (e.g., environment manager 104, 516/522, or 614 in Figures 1, 5, and 6, respectively) to manage a corresponding execution environment type. As illustrated, plugin interface 700 provides various methods (e.g., GetStatusSnapshot() and ActuateTargetState()). Example plugin interface 700 further provides various data types, each of which have associated properties (e.g., Status Snapshot, ProductLocator, ServiceInfo, NodeID, NodeInfo, and TargetInstallationState). As a result of defining, implementing, or otherwise using the aspects depicted by the example plugin interface 700, an environment manager may accommodate different execution environment types according to aspects described herein.

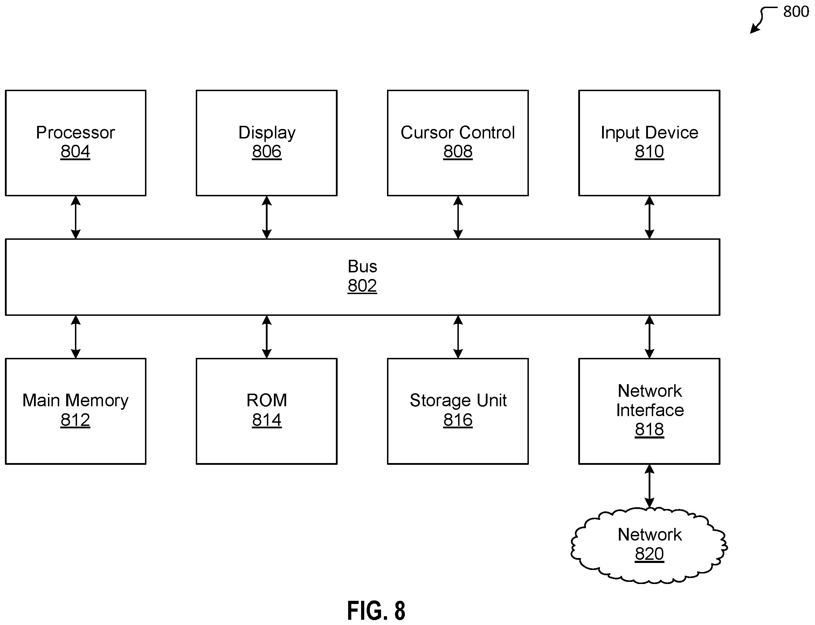

Figure 8 is a simplified diagram showing a computing system for implementing a system 800 for software execution environment management in accordance with at least one example set forth in the disclosure. This diagram is merely an example, which should not unduly limit the scope of the claims. One of ordinary skill in the art would recognize many variations, alternatives, and modifications.

The computing system 800 includes a bus 802 or other communication mechanism for communicating information, a processor 804, a display 806, a cursor control component 808, an input device 810, a main memory 812, a read only memory (ROM) 814, a storage unit 816, and a network interface 818. In some embodiments, some or all processes (e.g., steps) of the methods 100, 200, 300, and/or 400 are performed by the computing system 800. In some examples, the bus 802 is coupled to the processor 804, the display 806, the cursor control component 808, the input device 810, the main memory 812, the read only memory (ROM) 814, the storage unit 816, and/or the network interface 818. In certain examples, the network interface is coupled to a network 820. For example, the processor 804 includes one or more general purpose microprocessors. In some examples, the main memory 812 (e.g., random access memory (RAM), cache and/or other dynamic storage devices) is configured to store information and instructions to be executed by the processor 804. In certain examples, the main memory 812 is configured to store temporary variables or other intermediate information during execution of instructions to be executed by processor 804. For examples, the instructions, when stored in the storage unit 816 accessible to processor 804, render the computing system 800 into a special-purpose machine that is customized to perform the operations specified in the instructions. In some examples, the ROM 814 is configured to store static information and instructions for the processor 804. In certain examples, the storage unit 816 (e.g., a magnetic disk, optical disk, or flash drive) is configured to store information and instructions.

In some embodiments, the display 806 (e.g., a cathode ray tube (CRT), an LCD display, or a touch screen) is configured to display information to a user of the computing system 800. In some examples, the input device 810 (e.g., alphanumeric and other keys) is configured to communicate information and commands to the processor 804. For example, the cursor control component 808 (e.g., a mouse, a trackball, or cursor direction keys) is configured to communicate additional information and commands (e.g., to control cursor movements on the display 806) to the processor 804.

According to certain embodiments, a method for managing an execution environment by an environment manager is provided. The method comprises: determining an execution environment state corresponding to an execution environment; providing, to a management platform, an indication of the determined execution environment state; receiving, from the management platform, a recommendation for the execution environment that is based on the execution environment state; and configuring the execution environment according to the received recommendation, wherein the method is performed using one or more processors. For example, the method is implemented according to at least Figure 1, 2, and/or 4.

In an example, configuring the execution environment according to the received recommendation comprises at least one selected from a group consisting of: upgrading the execution environment; downgrading the execution environment; restarting the execution environment; and providing debugging information of the execution environment to the management platform. In another example, the received recommendation includes one or more steps to be performed by an execution manager entry point of the execution environment. In a further example, configuring the execution environment comprises providing an indication of the one or more steps to the execution manager entrypoint. In yet another example, the execution environment state corresponding to the execution environment is determined using a plugin associated with the execution environment. In a further still example, the plugin and an execution manager entrypoint of the execution environment are both associated with an execution environment type that corresponds to the execution environment. In another example, the execution environment type is a first execution environment type; the execution environment is a first execution environment of the first execution environment type; the plugin is a first plugin; and the method further comprises: determining, using a second plugin associated with the second execution environment type, a status corresponding to the second execution environment; providing, to the management platform, an indication of the determined status corresponding to the second execution environment; receiving, from the management platform, a recommendation for the second execution environment; and configuring, using the second plugin, the second execution environment according to the recommendation for the second execution environment. In a further example, configuring the execution environment according to the received recommendation comprises providing an indication of the recommendation to a plugin associated with the execution environment, thereby causing the plugin to configure the execution environment according to the recommendation. In yet another example, initiating execution of the execution environment is performed in response to an indication that is received from the management platform. In a further still example, the recommendation that is received from the management platform is further based on health information for the execution environment.

According to some embodiments, a method for managing an execution environment by an execution manager entrypoint is provided. The method comprises: determining, for an execution environment while the execution environment is executing, an execution environment health; providing, to a management platform, an indication of the determined execution environment health; receiving, from an environment manager, an indication of a recommendation from the management platform that is based on the determined execution environment health; and configuring the execution environment according to the received recommendation, wherein the method is performed using one or more processors. For example, the method is implemented according to at least Figure 1, 3, and/or 4.

In an example, configuring the execution environment according to the received recommendation comprises at least one selected from a group consisting of: updating a configuration of the execution environment; and executing at least a part of the received recommendation. In another example, the indication of the recommendation is received from a plugin of the environment manager. In a further example, the received recommendation is further based on an execution environment state determined by the plugin. In yet another example, the plugin and the execution manager entrypoint are both associated with an execution environment type that corresponds to the execution environment. In a further still example, the determined execution environment health is a first instance of execution environment health; and the method further comprises, while configuring the execution environment: determining, for the execution environment, a second instance of execution environment health; providing, to the management platform, an indication of the determined second instance of execution environment health.

According to certain embodiments, a system for using one or more model orchestrators, the system includes: one or more memories comprising instructions stored thereon; and one or more processors configured to execute the instructions and perform operations comprising: determining an execution environment state corresponding to an execution environment; providing, to a management platform, an indication of the determined execution environment state; receiving, from the management platform, a recommendation for the execution environment that is based on the execution environment state; and configuring the execution environment according to the received recommendation. For example, the system is implemented according to at least the aspects described with respect to Figure 1, 2, and/or 4.

In an example, configuring the execution environment according to the received recommendation comprises at least one selected from a group consisting of: upgrading the execution environment; downgrading the execution environment; restarting the execution environment; and providing debugging information of the execution environment to the management platform. In another example, the execution environment state corresponding to the execution environment is determined using a plugin associated with the execution environment; and the plugin and an execution manager entrypoint of the execution environment are both associated with an execution environment type that corresponds to the execution environment. In a further example, the recommendation was generated by processing the indication of the determined execution environment state using a large language model to generate model output comprising the recommendation.

For example, some or all components of various embodiments of the present disclosure each are, individually and/or in combination with at least another component, implemented using one or more software components, one or more hardware components, and/or one or more combinations of software and hardware components. In another example, some or all components of various embodiments of the present disclosure each are, individually and/or in combination with at least another component, implemented in one or more circuits, such as one or more analog circuits and/or one or more digital circuits. In yet another example, while the embodiments described above refer to particular features, the scope of the present disclosure also includes embodiments having different combinations of features and embodiments that do not include all of the described features. In yet another example, various embodiments and/or examples of the present disclosure can be combined.

Additionally, the methods and systems described herein may be implemented on many different types of processing devices by program code comprising program instructions that are executable by the device processing subsystem. The software program instructions may include source code, object code, machine code, or any other stored data that is operable to cause a processing system (e.g., one or more components of the processing system) to perform the methods and operations described herein. Other implementations may also be used, however, such as firmware or even appropriately designed hardware configured to perform the methods and systems described herein.

The systems' and methods' data (e.g., associations, mappings, data input, data output, intermediate data results, final data results, etc.) may be stored and implemented in one or more different types of computer-implemented data stores, such as different types of storage devices and programming constructs (e.g., RAM, ROM, EEPROM, Flash memory, flat files, databases, programming data structures, programming variables, IF-THEN (or similar type) statement constructs, application programming interface, etc.). It is noted that data structures describe formats for use in organizing and storing data in databases, programs, memory, or other computer-readable media for use by a computer program.

The systems and methods may be provided on many different types of computer-readable media including computer storage mechanisms (e.g., CD-ROM, diskette, RAM, flash memory, computer's hard drive, DVD, etc.) that contain instructions (e.g., software) for use in execution by a processor to perform the methods' operations and implement the systems described herein. The computer components, software modules, functions, data stores and data structures described herein may be connected directly or indirectly to each other in order to allow the flow of data needed for their operations. It is also noted that a module or processor includes a unit of code that performs a software operation and can be implemented, for example, as a subroutine unit of code, or as a software function unit of code, or as an object (as in an object-oriented paradigm), or as an applet, or in a computer script language, or as another type of computer code. The software components and/or functionality may be located on a single computer or distributed across multiple computers depending upon the situation at hand.

The computing system can include client devices and servers. A client device and server are generally remote from each other and typically interact through a communication network. The relationship of client device and server arises by virtue of computer programs running on the respective computers and having a client device-server relationship to each other.

This specification contains many specifics for particular embodiments. Certain features that are described in this specification in the context of separate embodiments can also be implemented in combination in a single embodiment. Conversely, various features that are described in the context of a single embodiment can also be implemented in multiple embodiments separately or in any suitable sub-combination. Moreover, although features may be described above as acting in certain combinations, one or more features from a combination can in some cases be removed from the combination, and a combination may, for example, be directed to a sub-combination or variation of a sub-combination.

Similarly, while operations are depicted in the drawings in a particular order, this should not be understood as requiring that such operations be performed in the particular order shown or in sequential order, or that all illustrated operations be performed, to achieve desirable results. In certain circumstances, multitasking and parallel processing may be advantageous. Moreover, the separation of various system components in the embodiments described above should not be understood as requiring such separation in all embodiments, and it should be understood that the described program components and systems can generally be integrated together in a single software product or packaged into multiple software products.

Although specific embodiments of the present disclosure have been described, it will be understood by those of skill in the art that there are other embodiments that are equivalent to the described embodiments. Accordingly, it is to be understood that the invention is not to be limited by the specific illustrated embodiments. Various modifications and alterations of the disclosed embodiments will be apparent to those skilled in the art. The embodiments described herein are illustrative examples. The features of one disclosed example can also be applied to all other disclosed examples unless otherwise indicated.

## Claims

1. A method for managing an execution environment by an environment manager, the method comprising:
determining an execution environment state corresponding to an execution environment;
providing, to a management platform, an indication of the determined execution environment state;
receiving, from the management platform, a recommendation for the execution environment that is based on the execution environment state; and
configuring the execution environment according to the received recommendation;
wherein the method is performed using one or more processors.

2. The method of claim 1, wherein configuring the execution environment according to the received recommendation comprises at least one selected from a group consisting of:
upgrading the execution environment;
downgrading the execution environment;
restarting the execution environment; and
providing debugging information of the execution environment to the management platform.

3. The method of claim 1 or claim 2, wherein the received recommendation includes one or more steps to be performed by an execution manager entrypoint of the execution , and optionally wherein configuring the execution environment comprises providing an indication of the one or more steps to the execution manager entrypoint.

4. The method of any preceding claim, wherein the execution environment state corresponding to the execution environment is determined using a plugin associated with the execution environment, and optionally wherein the plugin and an execution manager entrypoint of the execution environment are both associated with an execution environment type that corresponds to the execution environment, and further optionally wherein:
the execution environment type is a first execution environment type;
the execution environment is a first execution environment of the first execution environment type;
the plugin is a first plugin; and
the method further comprises:
determining, using a second plugin associated with the second execution environment type, a status corresponding to the second execution environment;
providing, to the management platform, an indication of the determined status corresponding to the second execution environment;
receiving, from the management platform, a recommendation for the second execution environment; and
configuring, using the second plugin, the second execution environment according to the recommendation for the second execution environment.

5. The method of any preceding claim, wherein configuring the execution environment according to the received recommendation comprises providing an indication of the recommendation to a plugin associated with the execution environment, thereby causing the plugin to configure the execution environment according to the recommendation.

6. The method of any preceding claim, wherein initiating execution of the execution environment is performed in response to an indication that is received from the management platform.

7. The method of any preceding claim, wherein the recommendation that is received from the management platform is further based on health information for the execution environment.

8. The method of any preceding claim, wherein the recommendation was generated by processing the indication of the determined execution environment state using a large language model to generate model output comprising the recommendation.

9. A method for managing an execution environment by an execution manager entrypoint, the method comprising:
determining, for an execution environment while the execution environment is executing, an execution environment health;
providing, to a management platform, an indication of the determined execution environment health;
receiving, from an environment manager, an indication of a recommendation from the management platform that is based on the determined execution environment health; and
configuring the execution environment according to the received recommendation;
wherein the method is performed using one or more processors.

10. The method of claim 9, wherein configuring the execution environment according to the received recommendation comprises at least one selected from a group consisting of:
updating a configuration of the execution environment; and
executing at least a part of the received recommendation.

11. The method of claim 10, wherein the indication of the recommendation is received from a plugin of the environment manager.

12. The method of claim 11, wherein the received recommendation is further based on an execution environment state determined by the plugin, and optionally wherein the plugin and the execution manager entrypoint are both associated with an execution environment type that corresponds to the execution environment.

13. The method of claim 11, wherein:
the determined execution environment health is a first instance of execution environment health; and
the method further comprises, while configuring the execution environment:
determining, for the execution environment, a second instance of execution environment health;
providing, to the management platform, an indication of the determined second instance of execution environment health.

14. Apparatus configured to perform the method of any preceding claim.

15. A computer program comprising instructions that when executed cause performance of the method of any of claims 1 to 13.
